# EUROPEAN PATENT APPLICATION

(11) **EP 2 723 022 A1**
(43) Date of publication of application: **23.04.2014**
(21) Application number: 12188803.6
(22) Date of filing: 17.10.2012
(51) Int. Cl.: H04L 12/58, H04M 1/02, G03B 21/00

(54) **Event message projecting circuit and method**

(71) Applicant: Fluiditech IP Limited, Victoria, Mahe (SC)
(72) Inventor: Chu, Yung-Chiang, Taipei City 115 (TW)
(74) Representative: Parker, Andrew James

(57) **Abstract**

An event message projecting circuit and method for taking the initiative in projecting an event message (such as a text, a picture, or a color) generated from a portable mobile communication device to a carrier so as to inform a user of the event message are introduced. The circuit includes a memory unit, a control module, and a projection module. The memory unit includes a plurality of memory cells. The control module receives the event message, generates a control signal, and sends the event message to the memory cells. The projection module fetches the event message from the memory cells according to the control signal, and projects the event message to the carrier, so as to inform the user that the portable mobile communication device has generated the event message, thereby preventing the user from omitting the event message available at the portable mobile communication device.

## Description

### FIELD OF THE INVENTION

The present invention relates to event message projecting circuits and methods, and more particularly, to a circuit and method for projecting an event message generated by a portable mobile communication device so as to inform a user of the event message.

### BACKGROUND OF THE INVENTION

Due to technological advancement, mobile communication devices, such as smartphones and tablet computers, are in wide use, and thus communication between users nowadays is convenient. Conventional media employed by the mobile communication devices include voice, text messages, and multimedia messages.

It is impossible for a user equipped with a mobile communication device to be on alert all the time for a communication request sent from another user. The prior art teaches telling a user whether s/he is currently receiving or has missed a communication request from another user, using a ring alert, a vibrating alert, or an indicator alert.

However, the aforesaid alerts do not always work. For example, chances are that a user does not notice the aforesaid alerts and thus misses a message from another user.

Accordingly, it is imperative to inform a user of a related communication message which is being generated or has been generated by the user's mobile communication device.

### SUMMARY OF THE INVENTION

It is an objective of the present invention to provide an event message projecting circuit for taking the initiative in projecting an event message (such as a text, a picture, or a color) generated by a portable mobile communication device to the outside of the portable mobile communication device so as to inform a user of the event message and thereby prevent the user from omitting the event message available at the portable mobile communication device.

Another objective of the present invention is to provide an event message projecting method whereby the user can obtain, in real time or regularly and by means of projection, the event message generated from the portable mobile communication device.

In order to achieve the above and other objectives, the present invention provides an event message projecting circuit taking the initiative in projecting an event message generated from a portable mobile communication device to a carrier to inform a user of the event message. The event message projecting circuit comprises a memory unit, a control module, and a projection module. The memory unit has a plurality of memory cells. The control module is connected to the memory unit and adapted to receive the event message, generate a control signal corresponding to the event message, and send the event message to the memory unit such that the event message is stored in one of the memory cells. The projection module is connected to the memory unit and the control module. The projection module fetches the event message from the memory unit according to the control signal and projects the event message.

In order to achieve the above and other objectives, the present invention provides an event message projecting method for allowing an event message generated from a portable mobile device to be projected to a carrier so as to inform a user of the event message. The event message projecting method comprises the steps of: receiving by a control module an event message to generate a control signal corresponding to the event message; sending the event message from the control module to a memory unit so as to store the event message in the memory unit; and driving a projection module to fetch the event message from the memory unit according to the control signal so as to project the event message to the carrier.

Compared with the prior art, the present invention provides an event message projecting circuit and method whereby a user is informed of an event message by a portable mobile communication device in real time or regularly without paying attention to the current status of correlation between the portable mobile communication device and the event message.

### BRIEF DESCRIPTION OF THE DRAWINGS

Objectives, features, and advantages of the present invention are hereunder illustrated with specific embodiments in conjunction with the accompanying drawings, in which:
FIG. 1 is a block diagram of an event message projecting circuit according to the first embodiment of the present invention;
FIG. 2 is a schematic view of the memory cells of FIG. 1;
FIG. 3 is a block diagram of the event message projecting circuit according to the second embodiment of the present invention; and
FIG. 4 is a schematic view of the process flow of an event message projecting method according to an embodiment of the present invention.

### DETAILED DESCRIPTION OF THE PREFERRED EMBODIMENTS

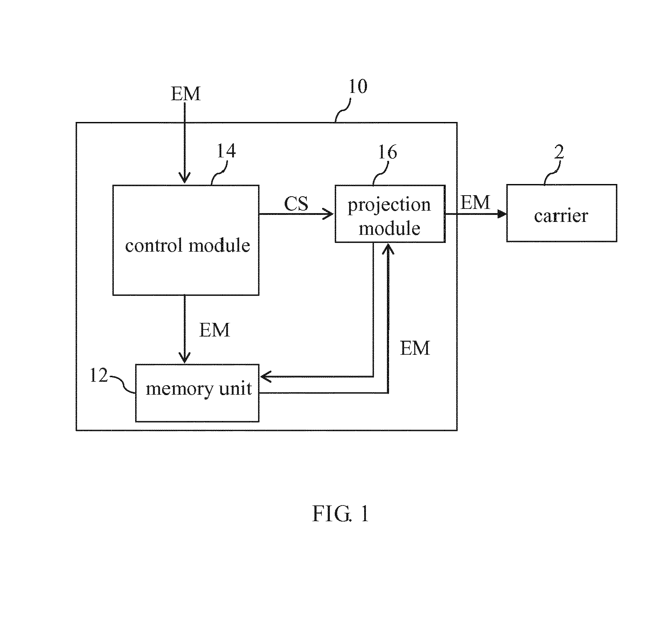

Referring to FIG. 1, there is shown a block diagram of an event message projecting circuit 10 according to the first embodiment of the present invention. As shown in FIG. 1, after a portable mobile communication device (not shown) has generated an event message EM, the event message projecting circuit 10 takes the initiative in projecting the event message EM to a carrier 2 to inform a user of the event message EM. The event message EM comes in the form of text, pictures, or colors. The portable mobile communication device is a notebook computer, a tablet computer, or a mobile phone. The event message projecting circuit 10 is built in the portable mobile communication device. Alternatively, the event message projecting circuit 10 is externally connected to the portable mobile communication device.

The event message EM is generated by the portable mobile communication device. In this embodiment, the portable mobile communication device is exemplified by a mobile phone. For example, the event message EM is an instant message notice event, an incoming call event, or an application event.

The instant message notice event is defined as an event where a mobile phone being operated by a user receives a text or multimedia message from another mobile phone through a communication base station. The incoming call event is defined as an event where the mobile phone being operated by the user receives a voice signal from another mobile phone through the communication base station, wherein the incoming call events are further divided into two categories, namely answered incoming calls and unanswered incoming calls, according to whether the voice signal reception is done. The application event is defined as an event generated in accordance with the result of execution of an application APP on the mobile phone. Take an alarm clock program as an example, to enable the mobile phone to execute the alarm clock program, the alarm clock program executes a time reminder in accordance with a schedule set by a user.

The carrier 2 is defined as an object on which the event message EM is displayed, such as a wall, a panel, a blackboard, or a ceiling.

The event message projecting circuit 10 comprises a memory unit 12, a control module 14, and a projection module 16.

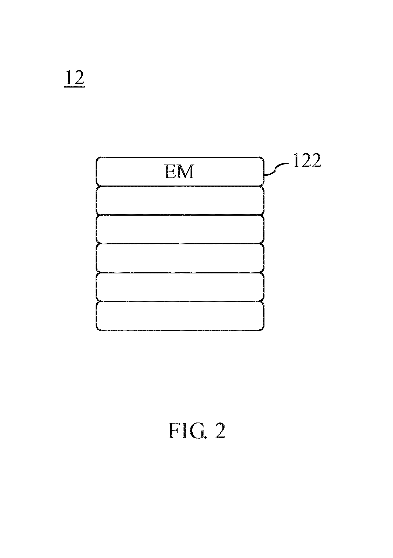

Referring to FIG. 2, the memory unit 12 comprises a plurality of memory cells 122. The memory cells 122 store one or more event messages EM.

Referring to FIG. 1, the control module 14 is connected to the memory unit 12. The control module 14 receives the event message EM generated from the portable mobile communication device. The control module 14 determines whether to generate a control signal CS according to whether the event message EM is received. The control signal CS is a triggering signal for starting the projection module 16. The control module 14 sends the received event message EM to the memory unit 12, such that the event message EM can be stored in one of the memory cells 122.

The projection module 16 is connected to the memory unit 12 and the control module 14. The projection module 16 fetches the event message EM from the memory unit 12 according to the control signal CS, and projects the event message EM to the outside of the portable mobile communication device. Furthermore, the projection module 16 projects the event message EM to the carrier 2.

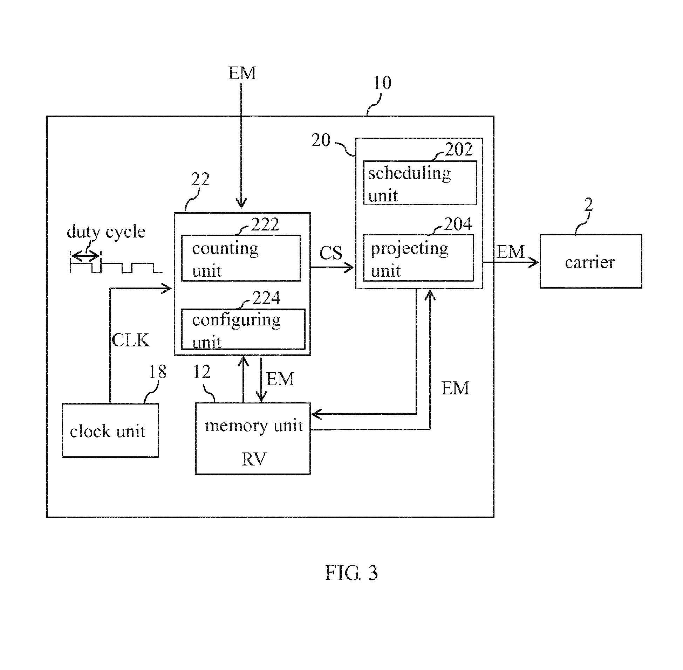

Referring to FIG. 3, there is shown a block diagram of an event message projecting circuit 10' according to the second embodiment of the present invention. As shown in FIG. 3, the event message projecting circuit 10' not only comprises the memory unit 12 in the first embodiment, but further comprises a clock unit 18, a projection module 20, and a control module 22. One of the memory cells 122 of the memory unit 12 stores a reference value RV in advance, wherein the reference value RV is five, for example.

The clock unit 18 generates a periodic clock signal CLK. In this embodiment, the clock signal CLK is exemplified by a square wave. A duty cycle of the clock signal CLK is defined by the peak and trough of the square wave. The duty cycle can be converted into a time period. For example, each duty cycle can last one second.

The projection module 20 further comprises a scheduling unit 202 and a projecting unit 204. The scheduling unit 202 drives the projection module 20 to fetch the event message EM from the memory cells 122, and then the projecting unit 204 projects the event message EM thus fetched to the carrier 2.

The control module 22 further comprises a counting unit 222 and a configuring unit 224.

The counting unit 222 is connected to the clock unit 18 and the memory unit 12. The counting unit 222 counts the cycle number of the clock signal CLK, that is, the number of duty cycles received by the counting unit 222 from the clock unit 18. The control module 22 will generate the control signal CS, provided that the cycle number equals the reference value RV. For example, given the reference value RV of five, if the clock signal CLK received by the counting unit 22 has five one-second duty cycles, the cycle number will equal the reference value RV, such that the counting unit 222 generates the control signal CS. Hence, the counting unit 222 projects the event message EM to the carrier 2 regularly, regardless of whether the event message EM is generated

The configuring unit 224 is connected to the memory unit 12 and the scheduling unit 202. The configuring unit 224 allows the user to configure the reference value RV stored in the memory cells 122, and allows the user to configure the scheduling unit 202 and thereby drive the projection module 20 to fetch the event message EM from the memory cells 122 in turn, at random, and/or in a specified manner.

The aforesaid embodiment applies to the situation where there is a plurality of said event messages EM, such that the scheduling unit 202 drives the projection module 20 to fetch the event messages EM from the memory cells 122 in turn, respectively.

Alternatively, the event messages EM are fetched from the memory cells 122 at random, respectively.

Alternatively, each of the event messages EM is fetched from a specific one of the memory cell 122.

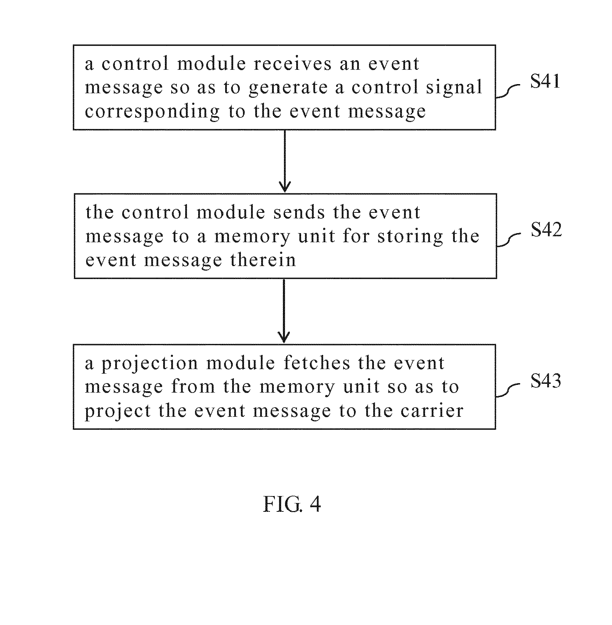

Referring to FIG. 4, there is shown a schematic view of the process flow of an event message projecting method according to an embodiment of the present invention. As shown in FIG. 4, the event message projecting method enables an event message generated from a portable mobile device to be projected to a carrier so as to inform a user of the event message.

The process flow of the event message projecting method starts from step S41 in which a control module receives an event message so as to generate a control signal corresponding to the event message.

In step S42, the control module sends the event message to a memory unit for storing the event message therein.

Step S43 involves driving a projection module to fetch the event message from the memory unit according to the control signal, so as to project the event message to the carrier. In another embodiment, the projection module fetches the event message from the memory unit in turn, at random, and/or in a specified manner. A point to note is that any step of the event message projecting method further comprises a sub-step in which the control module generates the control signal regularly according to a clock signal generated by a clock unit so as to drive the projection module to project the event message to the carrier, regardless of whether the event message is generated.

Compared with the prior art, the present invention provides an event message projecting circuit and method whereby a user is informed of an event message by a portable mobile communication device in real time or regularly without paying attention to the current status of correlation between the portable mobile communication device and the event message.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. An event message projecting circuit taking initiative in projecting an event message generated from a portable mobile communication device to a carrier to inform a user of the event message, the event message projecting circuit comprising:
a memory unit having a plurality of memory cells;
a control module connected to the memory unit and adapted to receive the event message, generate a control signal corresponding to the event message, and send the event message to the memory unit such that the event message is stored in one of the memory cells; and
a projection module connected to the memory unit and the control module and adapted to fetch the event message from the memory unit according to the control signal and project the event message.

2. The event message projecting circuit of claim 1, further comprising a clock unit connected to the control module for generating a periodic clock signal.

3. The event message projecting circuit of any of the preceding claims, and in particular of claim 2, wherein one of the memory cells stores a reference value.

4. The event message projecting circuit of any of the preceding claims, and in particular of claim 3, wherein the control module further comprises a counting unit connected to the clock unit and the memory unit, the counting unit counting a cycle number of the clock signal, so as for the control module to generate the control signal when the cycle number equals the reference value.

5. The event message projecting circuit of any of the preceding claims, and in particular of claim 3, wherein the projection module further comprises a scheduling unit and a projecting unit, the scheduling unit driving the projection module to fetch the event message from the memory cells, and the projecting unit projecting the event message thus fetched to the carrier.

6. The event message projecting circuit of any of the preceding claims, and in particular of claim 5, wherein the control module further comprises a configuring unit connected to the memory unit and the scheduling unit, such that the user can configure the reference value stored in the memory cells and configure the scheduling unit and thereby drive the projection module to fetch the event message from the memory cells in turn, at random, and/or in a specified manner.

7. An event message projecting method for allowing an event message generated from a portable mobile device to be projected to a carrier so as to inform a user of the event message, the event message projecting method comprising the steps of:
receiving by a control module an event message to generate a control signal corresponding to the event message;
sending the event message from the control module to a memory unit so as to store the event message in the memory unit; and
driving a projection module to fetch the event message from the memory unit according to the control signal so as to project the event message to the carrier.

8. The event message projecting method of claim 7, further comprising the sub-step of generating by the control module the control signal regularly according to a clock signal generated by a clock unit so as to drive the projection module to project the event message to the carrier.

9. The event message projecting method of either of claims 7 or 8, wherein, in the sub-step of driving the projection module to fetch the event message from the memory unit according to the control signal so as to project the event message to the carrier, the projection module fetches the event message from the memory unit in turn, at random, and/or in a specified manner.

10. The event message projecting method of any of claims 7 to 9, wherein the event message comes in form of at least one of text, pictures, and colors.
